(19) Europäisches Patentamt
European Patent Office
Office européen des brevets

(11) **EP 4 070 950 A1**

(12) **EUROPEAN PATENT APPLICATION**

(43) Date of publication:
**12.10.2022 Bulletin 2022/41**

(21) Application number: **22159048.2**

(22) Date of filing: **28.02.2022**

(51) International Patent Classification (IPC):
**B32B 17/10** (2006.01)      **C03C 17/42** (2006.01)
**G02B 5/30** (2006.01)      **C08J 7/04** (2020.01)
**C08J 7/046** (2020.01)      **B32B 27/08** (2006.01)

(52) Cooperative Patent Classification (CPC):
**C08J 7/042; B32B 7/12; B32B 27/08; C03C 17/42;
C08J 7/046; G02B 5/3066;** B32B 2457/20;
B32B 2571/00; C08J 2300/12; C08J 2400/24

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **05.04.2021   JP 2021064139**

(71) Applicant: **Japan Aviation Electronics Industry,
Limited
Tokyo 150-0043 (JP)**

(72) Inventors:
• **TAKATA, Shingo
Tokyo, 150-0043 (JP)**
• **NINOKATA, Toshihiro
Tokyo, 150-0043 (JP)**
• **IWASAKI, Akira
Tokyo, 150-0043 (JP)**

(74) Representative: **Prüfer & Partner mbB
Patentanwälte · Rechtsanwälte
Sohnckestraße 12
81479 München (DE)**

(54) **LAMINATED BODY AND DISPLAY DEVICE PROVIDED WITH THE SAME**

(57)      A laminated body is provided with a resinous base member, a lipophilic layer and a predetermined layer. The predetermined layer is located between the resinous base member and the lipophilic layer. The predetermined layer has a refractive index within a range of 1.42 to 1.49. The lipophilic layer has a surface which is 60 nm or less distant from the predetermined layer.

FIG. 1

EP 4 070 950 A1

**Description**

BACKGROUND OF THE INVENTION

This invention relates to a laminated body and a display device provided with the laminated body, particularly, to a laminated body having a structure which makes fingerprints got on a surface of the laminated body inconspicuous and to a display device provided with the laminated body.

JP2015-75560A (Patent Document 1) discloses a lipophilic laminated body having a structure which makes fingerprints got on a surface of the lipophilic laminated body inconspicuous.

As shown in Fig. 3, the lipophilic laminated body 90 disclosed in Patent Document 1 has a resinous base member 92, at least one middle layer 94 and a lipophilic resinous layer 96. Use of a layer which has an oleic acid contact angle of 10° or less at a surface thereof as the lipophilic resinous layer 96 makes fingerprints got on the surface inconspicuous.

SUMMARY OF THE INVENTION

The lipophilic resinous layer 96 of Patent Document 1 is formed with a moth eye structure for a purpose of antireflection of light. Here, in the laminated body having a moth eye structure, interference fringes might be caused by existence of an interface between a layer forming the moth eye structure and another layer. Therefore, the lipophilic laminated body 90 of Patent Document 1 prevents the interference fringes from being caused by increasing a difference between a refractive index of the lipophilic resinous layer 96 and a refractive index of the middle layer 94 to over zero.

However, in the lipophilic laminated body 90 of the Patent Document 1, no consideration is given to optical interference depending on a difference between the refractive index of the lipophilic resinous layer 96 and a refractive index of the fingerprints (sebaceous matter) got on the surface of the lipophilic resinous layer 96. Therefore, the lipophilic laminated body 90 of Patent Document 1 still has a problem that the fingerprints got on the surface thereof might be conspicuous.

It is an object of the present invention to provide a laminated body having a structure which makes fingerprints got on a surface thereof inconspicuous.

One aspect of the present invention provides a laminated body which comprises a resinous base member, a lipophilic layer and a predetermined layer. The predetermined layer is located between the resinous base member and the lipophilic layer. The predetermined layer has a refractive index within a range of 1.42 to 1.49. The lipophilic layer has a surface which is 60 nm or less distant from the predetermined layer.

Another aspect of the present invention provides a display device which comprises the laminated body.

In the laminated body of the present invention, the lipophilic layer is provided as the surface layer. Accordingly, even if a fingerprint gets on the surface layer, a difference between a reflection angle of light on the fingerprint and a reflection angle of light in the vicinity of the fingerprint can be reduced. In addition to this, in the laminated body of the present invention, the surface of the lipophilic layer is 60 nm or less distant from the predetermined layer. When the surface of the lipophilic layer is 60 nm or less distant from the predetermined layer, influence from a member existing on it is optically negligible. In other words, a state is substantially formed as if an interface is located between a fingerprint got on the surface and the predetermined layer. In addition, the predetermined layer has the refractive index within the range of 1.42 to 1.49 which is substantially equal to a refractive index of the fingerprint. Therefore, optical interference caused by a difference between the refractive index of the fingerprint and the refractive index of the predetermined layer can be suppressed. Thus, according to the present invention, the fingerprint got on the surface of the lipophilic layer can be made more inconspicuous.

An appreciation of the objectives of the present invention and a more complete understanding of its structure may be had by studying the following description of the preferred embodiment and by referring to the accompanying drawings.

BRIEF DESCRIPTION OF THE DRAWINGS

Fig. 1 is a schematic cross-sectional view showing a laminated body according to an embodiment of the present invention.

Fig. 2 is a graph showing a simulation result which indicates relationship between thickness of a lipophilic layer and optical interference ΔY.

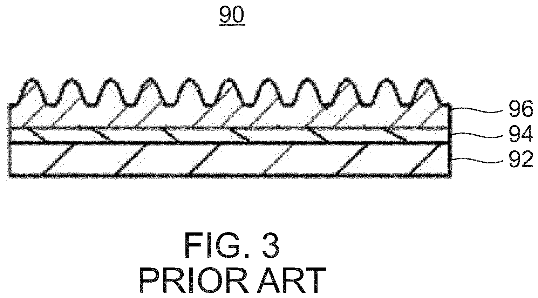

Fig. 3 is a schematic cross-sectional view showing a lipophilic laminated body of Patent Document 1.

While the invention is susceptible to various modifications and alternative forms, specific embodiments thereof are shown by way of example in the drawings and will herein be described in detail. It should be understood, however, that the drawings and detailed description thereto are not intended to limit the invention to the particular form disclosed, but on the contrary, the intention is to cover all modifications, equivalents and alternatives falling within the spirit and scope of the present invention as defined by the appended claims.

DETAILED DESCRIPTION

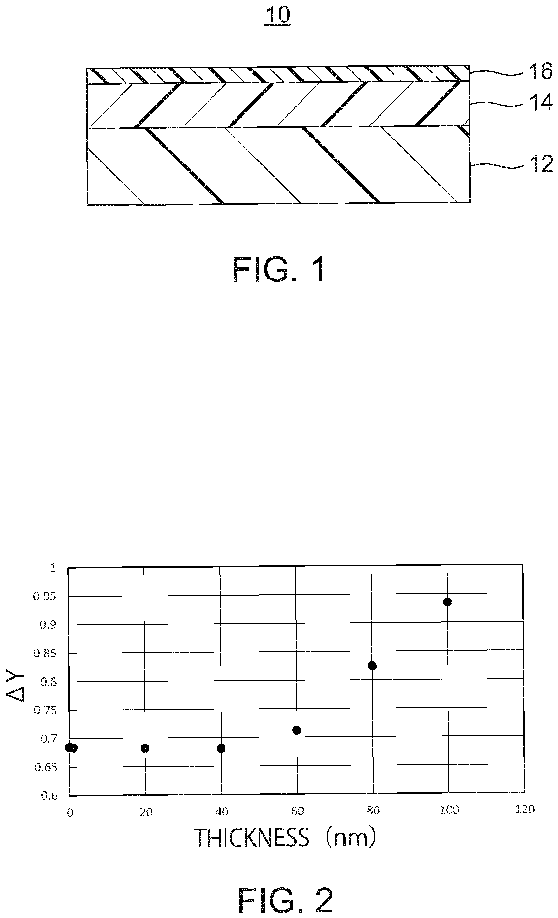

Referring to Fig. 1, a laminated body 10 according to an embodiment of the present invention is provided with a resinous base member 12, a predetermined layer 14 and a lipophilic layer 16. The resinous base member 12, the predetermined layer 14 and the lipophilic layer 16 are laminated in this order. In other words, the predetermined layer 14 are located between the resinous base member 12 and the lipophilic layer 16.

As shown in Fig. 1, in the present embodiment, the lipophilic layer 16 is directly provided on the predetermined layer 14. However, the present invention is not limited thereto. Between the lipophilic layer 16 and the predetermined layer 14, a first additional layer, such as an adhesion layer, may be provided. Moreover, in the present embodiment, the predetermined layer 14 is directly formed on the resinous base member 12. However, the present invention is not limited thereto. Between the predetermined layer 14 and the resinous base member 12, a second additional layer may be provided.

In the present invention, the resinous base member 12 is not particularly limited but may be a transparent resin film made of triacetyl cellulose (TAC), polymethylmethacrylate (PMMA), polycarbonate (PC), polyethylene terephthalate (PET) or the like. Moreover, in the present invention, the predetermined layer 14 is not particularly limited but may be a layer made of an active energy ray curable resin, a thermosetting resin or the like. Furthermore, in the present invention, the lipophilic layer 16 is not particularly limited but may be a layer made of an active energy ray curable resin, a thermosetting resin or the like. Additionally, the predetermined layer 14 and the lipophilic layer 16 are given characteristics different from each other by added substances included in them.

As shown in Fig. 1, the lipophilic layer 16 is located at an outermost layer of the laminated body 10. When used, the outermost layer of the laminated body 10 is put in a situation that it can be touched by a human hand. For example, the laminated body 10 is used in a display device provided with a touch panel or a display panel. The laminated body 10 may be used for an operation surface of the touch panel, a display surface of the display panel or a protective member such as a cover panel covering the display surface. However, the present invention is not limited thereto. An intended use of the laminated body 10 is not particularly limited.

A surface of the lipophilic layer 16 has lipophilicity. In the present embodiment, "having lipophilicity" indicates that an oleic contact angle is 50° or less on the surface. A fingerprint or sebum got on a surface of an object which has oil repellency reflects light at an angle remarkably different from a reflection angle of light at the vicinity thereof and is highly visible. On the other hand, a fingerprint got on the surface of the lipophilic layer 16 reflects light at an angle close to a reflection angle of light at the vicinity thereof and is not so visible. It is often the case that an oleic contact angle becomes 50° or less when the lipophilic layer 16 is made of a material which does not include a fluorine-based material having oil repellency.

As described above, the lipophilic layer 16 can suppress an influence of the fingerprint or the sebum on the reflection of the light. On the other hand, the lipophilic layer 16 has a refractive index different from that of the fingerprint. Accordingly, optical interference might be caused by a refractive index difference at an interface between the fingerprint and the lipophilic layer 16. In order to suppress this optical interference, in the laminated body 10 according to the present embodiment, a thickness of the lipophilic layer 16 is reduced as small as possible, and a layer having a refractive index substantially equal to that of the fingerprint is used as the predetermined layer 14.

In detail, in the present embodiment, the surface of the lipophilic layer 16 is 60 nm or less distant from a surface of the predetermined layer 14. When the lipophilic layer 16 is directly laminated on the predetermined layer 14, the thickness of the lipophilic layer 16 should be 60 nm or less. When the first additional layer exists between the lipophilic layer 16 and the predetermined layer 14, a sum of the thickness of the lipophilic layer 16 and a thickness of the first additional layer should be 60 nm or less. With this structure, the lipophilic layer 16 can maintain the lipophilicity of the surface thereof and suppress the optical influence of the refractive index thereof. In other words, with this structure, it can be regarded that the fingerprint substantially gets on the predetermined layer 14 directly.

The reason why the surface of the lipophilic layer 16 is 60 nm or less distant from the surface of the predetermined layer 14 is based on results of simulation carried out by the inventors. In the simulation, only the thickness of the lipophilic layer 16 of the laminated body 10 was changed. In the simulation, a representative value of 50 nm was used as a thickness of the fingerprint though the thickness of the fingerprint was in a range of 10 nm to several hundred nm by actual measurement. In the simulation, optical interference $\Delta Y$ is represented by $\Delta Y = \int$ photopic spectral luminous efficiency function $\times$ D65 luminant function $\times$ (RA - RB) d$\lambda$, where RA is an intensity reflectivity on a surface of the laminated body 10, and RB is an intensity reflectivity on a fingerprint got on the surface of the laminated body 10.

In the simulation, an intensity reflectivity Rm is given by a formula 1.

[Formula 1]

$$R_m = \frac{(\eta_a m_{11} - \eta_s m_{22})^2 + (\eta_a \eta_s m_{12} - m_{21})^2}{(\eta_a m_{11} + \eta_s m_{22})^2 + (\eta_a \eta_s m_{12} + m_{21})^2}$$

In the formula 1, $\eta_a$ is a refractive index of air, $\eta_s$ is a refractive index of the resinous base member 12, and m is a component of a characteristic matrix [M]. The characteristic matrix [M] is represented by a formula 2.

[Formula 2]

$$[M] = \prod_{j=1}^{n} [M_j] = \begin{pmatrix} m_{11} & m_{12} \\ m_{21} & m_{22} \end{pmatrix}$$

$$[M_j] = \begin{pmatrix} \cos \phi_j & i\eta_j^{-1} \sin \phi_j \\ i\eta_j \sin \phi_j & \cos \phi_j \end{pmatrix}$$

In the formula 2, n is the number of layers laminated on the resinous base member 12, j is a number of each of the layers laminated on the resinous base member 12 when numbered from the outermost layer of the layers, $\eta$ is an optical admittance, and $\varphi$ is an optical path length. When a fingerprint gets on the surface of the laminated body 10, the fingerprint is regarded as the outermost layer of the laminated body 10. Moreover, $\eta$ is represented by a formula 3, and $\varphi$ is represented by a formula 4.

[Formula 3]

$$\eta_j = \begin{cases} N_j / \cos \varphi_j & \text{(for p-polarization)} \\ -N_j \cos \varphi_j & \text{(for s-polarization)} \end{cases} \quad (j = 1 \sim n)$$

[Formula 4]

$$\phi_j = K_j d_j$$

$$K_j = \frac{2\pi N_j}{\lambda} \cos \varphi_j$$

In each of the formulas 3 and 4, N is a refractive index of each of the layers, and $\varphi$ is an incidence angle of a light to each of the layers. Moreover, in the formula 4, d is a thickness of each of the layers, and $\lambda$ is a wavelength of the light.

As understood from Fig. 2, as the thickness of the lipophilic layer 16 increases over 60 nm, the optical interference ΔY significantly increases. On the other hand, when the thickness of the lipophilic layer 16 is 60 nm or less, the lipophilic layer 16 hardly influences the optical interference ΔY of the laminated body 10. Accordingly, in the laminated body 10 according to the present embodiment, the thickness of the lipophilic layer 16 should be 60 nm or less. When the first additional layer exists between the lipophilic layer 16 and the predetermined layer 14, the sum of the thickness of the lipophilic layer 16 and the thickness of the first additional layer should be 60 nm or less.

Moreover, in the present embodiment, the refractive index of the predetermined layer 14 is within a range of 1.42 to 1.49. This range is substantially equal to that of the refractive index of the fingerprint. In detail, the fingerprint is mainly formed of water and sebum components, and ratios of the sebum components increase with evaporation of the water. Accordingly, there is nothing wrong with assuming that the fingerprint is the sebum in many cases. As components forming the sebum, there are a fatty acid, a glycerolipid, a fatty acid ester, a wax ester, a cholesterol derivative, a squalene and so on. The fat acid is, for example, an oleic acid, a stearic acid, a linolenic acid, a palmitic acid, a pelargonic acid, an adipic acid, a tridecanoic acid, a myristoleic acid, a tetradecanoic acid or a palmitoleic acid. The glycerolipid is, for example, a monoolein, a trimyristin, a monocaprylin, a triolein, a monolaurin, a monopalmitin, a monostearin, a tristearin, a tripalmitin or a tricapronin. The fatty acid ester is, for example, an n-octanoic acid butyl ester, an octanoic acid benzyl ester, a decanoic acid isobutyl ester, an undecanoic acid ethyl ester, a stearic acid ethyl ester, a palmitic acid ethyl ester, a pentadecanoic acid ethyl ester, a lauric acid benzyl ester, an n-octanoic acid amyl ester or a myristic acid butyl ester. The wax ester is, for example, a stearic acid dodecyl ester, a decanoic acid decyl ester, a palmitic acid hexadecyl ester, a myristic acid 3-isoamyl-6-methyl-2-heptyl ester, a myricyl palmitate, a cetyl palmitate or a myricyl cerotate. The cholesterol derivative is, for example, a cholesterol, a 7-dehydrocholesterol, a vitamin D, a cholic acid, a chenodeoxycholic acid, a deoxycholic acid, a lithocholic acid, a progesterone, an aldosterone or a cortisol. Here, there has been known that the components forming the sebum and ratios of them have individual differences and age differences. However, a refractive index of the sebum must be within a range between a minimum value of refractive indexes of the components included in the sebum and a maximum value of the refractive indexes of the components included in the sebum. Among the components of the sebum mentioned above, the n-octanoic acid butyl ester is a substance having the minimum refractive index, and the refractive index thereof is 1.42. Moreover, among the components of the sebum mentioned above, the octanoic acid benzyl ester is a substance having the maximum refractive index, and the refractive index thereof is 1.49. Accordingly, the refractive index of the fingerprint can be believed to be within a range of 1.42 to 1.49. Accordingly, in the present embodiment, it is regarded that the refractive index of the predetermined layer 14 is within the range of 1.42 to 1.49. By reducing the thickness of the lipophilic layer 16 as mentioned above, the fingerprint got on the lipophilic layer 16 can become regarded just as if the fingerprint got on the surface of the predetermined layer 14 in the present embodiment. Therefore, by making the refractive index of the predetermined layer 14 be substantially equal to the refractive index of the fingerprint, the optical reflection caused by the refractive index difference between the fingerprint and the lipophilic layer 16 can be suppressed.

When the laminated body 10 has the second additional layer, a reflectivity of the second additional layer is not particularly limited. The reflectivity of the second additional layer may be freely set according to the intended use of the laminated body 10. In other words, the reflectivity of the second additional layer may be substantially equal to or remarkably different from a reflectivity of the predetermined layer 14.

In the present embodiment, a distance from the surface of the laminated body 10 to the predetermined layer 14 and the refractive index of the predetermined layer 14 can be nondestructively measured by using an ellipsometer. Alternatively, the laminated body 10 may be cut, and a cut surface thereof may be observed and analyzed after ion milling or focused ion beam (FIB) processing is carried out for the cut surface. For example, identifying chemical elements and identifying structure may be carried out by qualitative analysis using an X-ray photoelectron spectroscopy (XPS) or the like. Moreover, confirmation of the number of the layers and the thickness of each of the layers may be carried out by using an electronic microscope. By comparing the measurement results measured by the ellipsometer and other observation or analyzation results with each other, structure confirmation with higher accuracy can be carried out.

Although the specific explanation about the present invention is made above with reference to the embodiments, the present invention is not limited thereto but susceptible of various modifications and alternative forms without departing from the spirit of the invention.

While there has been described what is believed to be the preferred embodiment of the invention, those skilled in the art will recognize that other and further modifications may be made thereto without departing from the spirit of the invention, and it is intended to claim all such embodiments that fall within the true scope of the invention.

## Claims

1. A laminated body comprising a resinous base member, a lipophilic layer and a predetermined layer, wherein:

the predetermined layer is located between the resinous base member and the lipophilic layer;
the predetermined layer has a refractive index within a range of 1.42 to 1.49; and
the lipophilic layer has a surface which is 60 nm or less distant from the predetermined layer.

2. The laminated body as recited in claim 1, wherein the lipophilic layer has a contact angle of 50° or less against an oleic acid.

3. A display device comprising the laminated body as recited in claim 1 or 2.

<u>10</u>

FIG. 1

FIG. 2

90

96
94
92

FIG. 3
PRIOR ART

## EUROPEAN SEARCH REPORT

Application Number

EP 22 15 9048

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2001 040284 A (FUJI PHOTO FILM CO LTD) 13 February 2001 (2001-02-13) * abstract * * claims 1-6 * * paragraph [0073] * * paragraphs [0094] – [0095] * | 1-3 | INV. B32B17/10 C03C17/42 G02B5/30 C08J7/04 C08J7/046 B32B27/08 |
| X | EP 2 056 133 A1 (FUJIFILM CORP [JP]) 6 May 2009 (2009-05-06) * abstract * * claims 1-14 * * paragraph [0008] * * page 8, paragraph 67 – page 9, paragraph 70 * * page 10, paragraph 89;96 * * page 11, paragraph 99 * * paragraphs [0181] – [0198]; examples 1,2 * | 1-3 | |
| X | EP 2 034 339 A1 (FUJIFILM CORP [JP]) 11 March 2009 (2009-03-11) * abstract * * claims 1-12 * * paragraph [0008] * * paragraph [0030] * * page 15, paragraph 119 – page 16, paragraph 123 * * page 17, paragraph 141;148 * * page 18, paragraph 151 * * paragraphs [0161] – [0178]; examples 1,2 * | 1-3 | TECHNICAL FIELDS SEARCHED (IPC) B32B C03C G02B C08J |
| A | WO 2008/117475 A1 (AICA KOGYO CO LTD [JP]; HISANO NORIKAZU [JP] ET AL.) 2 October 2008 (2008-10-02) * the whole document * | 1-3 | |

-/--

The present search report has been drawn up for all claims

| Place of search | Date of completion of the search | Examiner |
|---|---|---|
| Munich | 4 August 2022 | Schlembach, Sandra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2015/053275 A1 (DEXERIALS CORP [JP]) 16 April 2015 (2015-04-16) * the whole document * ----- | 1-3 | |
| A | IACONO SCOTT T. ET AL: "Recent Studies on Fluorinated Silica Nanometer-Sized Particles", NANOMATERIALS, vol. 9, no. 5, 23 April 2019 (2019-04-23), pages 1-18, XP055948939, DOI: 10.3390/nano9050684 Retrieved from the Internet: URL:https://www.ncbi.nlm.nih.gov/pmc/artic les/PMC6567222/pdf/nanomaterials-09-00684. pdf> * the whole document * ----- | 1-3 | |

TECHNICAL FIELDS
SEARCHED      (IPC)

The present search report has been drawn up for all claims

| Place of search | Date of completion of the search | Examiner |
|---|---|---|
| Munich | 4 August 2022 | Schlembach, Sandra |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 22 15 9048

This annex lists the patent family members relating to the patent documents cited in the above-mentioned European search report.
The members are as contained in the European Patent Office EDP file on
The European Patent Office is in no way liable for these particulars which are merely given for the purpose of information.

04-08-2022

| Patent document cited in search report | | Publication date | Patent family member(s) | | Publication date |
|---|---|---|---|---|---|
| JP 2001040284 | A | 13-02-2001 | NONE | | |
| EP 2056133 | A1 | 06-05-2009 | CN | 101506701 A | 12-08-2009 |
| | | | EP | 2056133 A1 | 06-05-2009 |
| | | | JP | 2008052076 A | 06-03-2008 |
| | | | KR | 20090071566 A | 01-07-2009 |
| | | | US | 2010177383 A1 | 15-07-2010 |
| | | | WO | 2008023477 A1 | 28-02-2008 |
| EP 2034339 | A1 | 11-03-2009 | CN | 101467080 A | 24-06-2009 |
| | | | EP | 2034339 A1 | 11-03-2009 |
| | | | JP | 2007334150 A | 27-12-2007 |
| | | | KR | 20090031374 A | 25-03-2009 |
| | | | US | 2009201583 A1 | 13-08-2009 |
| | | | WO | 2007145022 A1 | 21-12-2007 |
| WO 2008117475 | A1 | 02-10-2008 | JP | 2008241882 A | 09-10-2008 |
| | | | WO | 2008117475 A1 | 02-10-2008 |
| WO 2015053275 | A1 | 16-04-2015 | JP | 2015075560 A | 20-04-2015 |
| | | | WO | 2015053275 A1 | 16-04-2015 |

EPO FORM P0459

For more details about this annex : see Official Journal of the European Patent Office, No. 12/82

EP 4 070 950 A1

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015075560 A